# EUROPEAN PATENT APPLICATION

(11) **EP 1 367 527 A2**
(43) Date of publication of application: **03.12.2003**
(21) Application number: 03076696.8
(22) Date of filing: 30.05.2003
(51) Int. Cl.: G06K 7/10

(54) **Code reader**

(30) Priority: 30.05.2002 JP 2002195251; 29.11.2002 JP 2002382825
(71) Applicant: Aisin Engineering Co Ltd, Kariya, Aichi (JP)
(72) Inventor: Okada, Tohru, Aichi-gun, Aichi (JP)
(74) Representative: SERJEANTS

(57) **Abstract**

A code reader which includes a housing, a reading portion, provided on the housing, for reading a unique code provided on an object, an illumination device provided in the housing, an image capturing device, provided in the housing, for imaging the unique code, the illumination device irradiating light to a surface to be read provided with the unique code reflecting the irradiated light, the image capturing device configured to be entered with the reflective light via an entrance pupil provided in the housing, the image capturing device configured to read information of the unique code, a diffusion member for permeating and diffusing the light from the illumination device and for irradiating the diffused light to the surface to be read, the plural illumination device positioned opposing each other relative to the entrance pupil, and the diffusion member positioned between the illumination device and the reading portion.

## Description

### FIELD OF THE INVENTION

The present invention relates to a code reader. More specifically, the present invention pertains to an internal construction of a code reader for reading a unique or identical code (i.e., unique information such as one dimensional code, a two dimensional code, a three dimensional code, and a hybrid multi-dimensional code combining different codes that show the unique information for an object) based on a reflection of irradiated light reflecting the unique code by irradiating the light from a light source relative to the unique code provided on the object.

### BACKGROUND OF THE INVENTION

In order to control particular objects (e.g., products) each object is provided with a unique code (e.g., a one dimensional code or two dimensional code showing the information identifying the product) for differentiating each product. By reading the unique code provided on the particular product with a code reader the product is comprehensively controlled.

A code reader described in Japanese Patent Laid-Open Publication No. 2001-160115 includes a lens and a sensor provided on a top portion of a body of the code reader, a reading portion provided on a bottom portion of the code reader, and a plurality of light sources opposingly positioned on an internal peripheral surface of the reading portion. With the code reader described in Japanese Patent Laid-Open Publication No. 2001-160115, the light from the light sources is irradiated on a surface to be read provided with a code by positioning the plural light sources on the internal peripheral surface of the reading portion.

With the code reader described in Japanese Patent Laid-Open Publication No. 2001-160115, the surrounding of the lens for entering the reflective light to the sensor is brightly illuminated because the plural light sources are opposingly provided. However, the illumination to the surface to be read is performed by utilizing an expanse of an irradiation angle of the light from the light sources. Thus, the longer a distance between the reading portion and the surface to be read, the more difficult the light from the light sources reaches the surface to be read on which the code is provided. Accordingly, the efficient irradiation is not performed with the foregoing construction for illuminating the surface to be read with the light generated by the light sources opposingly positioned and the surface to be read becomes dark with the foregoing construction to make the recognition of the code difficult.

In addition, with the code reader described in Japanese Patent Laid-Open Publication No. 2001-160115, the light generated by the light source is unlikely uniformly irradiated relative to the surface to be read and the brightness of the generated light is uneven to negatively affect the code reading.

A need thus exists for a code reader which brightly illuminates a surface to be read and facilitates the code recognition by irradiating the even light to the surface to be read.

### SUMMARY OF THE INVENTION

In light of the foregoing, the present invention provides a code reader which includes a housing, a reading portion, provided on the housing, for reading a unique code provided on an object, an illumination means provided in the housing, an image capturing means, provided in the housing, for imaging the unique code, the illumination means irradiating light to a surface to be read provided with the unique code reflecting the irradiated light, the image capturing means configured to be entered with the reflective light via an entrance pupil provided in the housing, the image capturing means configured to read information of the unique code, a diffusion member for permeating and diffusing the light from the illumination means and for irradiating the diffused light to the surface to be read, the plural illumination means positioned opposing each other relative to the entrance pupil, and the diffusion member positioned between the illumination means and the reading portion.

According to another aspect of the present invention, a code reader includes a housing, a reading portion, provided on the housing, for reading a unique code provided on an object, a light source, provided in the housing, configured to irradiate light to a surface to be read, a CCD camera, provided in the housing, configured to image the unique code via an entrance pupil provided in the housing, a diffusion member configured to permeate and diffuse the light from the light source and to irradiate the diffused light to the surface to be read, the plural light source positioned opposing each other relative to the entrance pupil, and the diffusion member positioned between the light source and the reading portion.

### BRIEF DESCRIPTION OF THE DRAWING FIGURES

The foregoing and additional features and characteristics of the present invention will become more apparent from the following detailed description considered with reference to the accompanying drawing figures in which like reference numerals designate like elements.
Fig. 1 is an over view showing a configuration of a code reader according to a first embodiment of the present invention.
Fig. 2 is a cross-sectional view (i.e., view from right side on X-Y plane) of the code reader of Fig. 1.
Fig. 3 is a cross-sectional view (i.e., view from left side on X-Y plane) of the code reader of Fig. 1
Fig. 4 is a cross-sectional view of a hood portion on X-Z plane of Fig. 1.
Fig. 5 is a view showing an internal construction removed with a housing on a back surface from the code reader of Fig. 1.

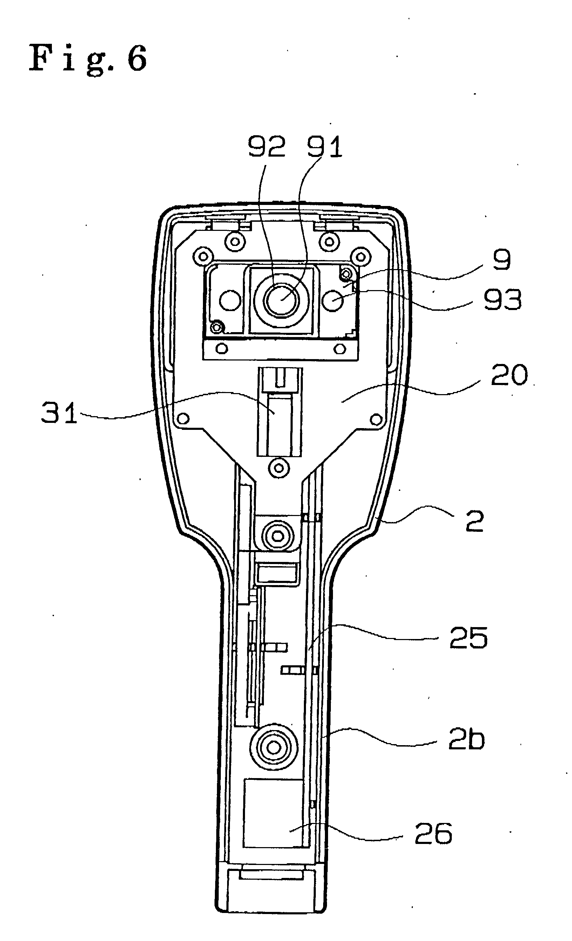

Fig. 6 is a view showing an internal construction removed with a main board and an optical board from Fig. 5.
Fig. 7 is a back view of the housing of the code reader of Fig. 1.
Fig. 8 is a side view showing a construction of an illumination unit provided in the code reader of Fig. 1.
Fig. 9 is a cross-sectional view on X-Y plane showing an internal construction of the illumination unit shown in Fig. 8.
Fig. 10 is an explanatory view for indicating a reading range when performing the code reading of a unique code with the code reader of Fig. 2.
Fig. 11 is a view showing a configuration of a two dimensional code provided on an object shown in Fig. 10.
Fig. 12 is an explanatory view showing an expansion of the light when the light is irradiated from the illumination unit to the surface to be read.
Fig. 13 is a perspective view showing a configuration of a diffusion sheet shown in Fig. 12.
Fig. 14 is a perspective view showing a configuration of a diffusion sheet according to a second embodiment of a code reader of the present invention.

### DETAILED DESCRIPTION OF THE INVENTION

An embodiment of a code reader according to the present invention will be explained with reference to the illustrations of the drawing figures.

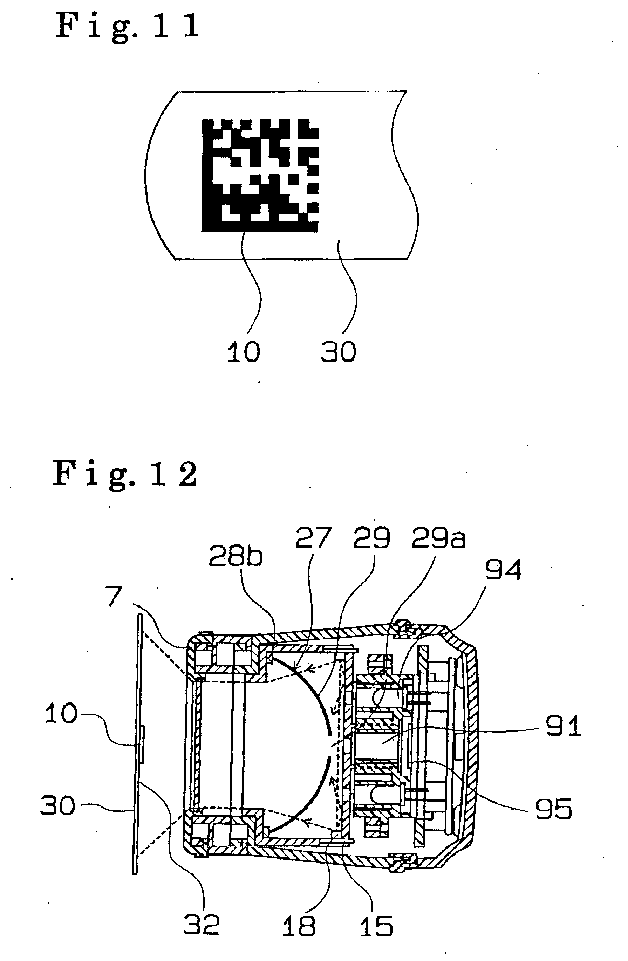

A code reader 1 is configured to read the information unique to an object 30 (Fig. 11) from a code 10 (e.g., one dimensional code, two dimensional code, three dimensional code, or multi-dimensional code combined with different codes hereinafter referred to as a code) by providing the unique code 10 directly or indirectly on the object in order to identify the particular object 30 among the plural objects made of metal, rubber, ceramic, and resin, or the like. With the code reader according to this non-limiting embodiment, a two dimensional code is applied and the code reader 1 for reading the information shown with the two-dimensional code will be explained.

The code is not limited to the two-dimensional code, and members printed or inscribed with one dimensional code, three dimensional code, or multi-dimensional code represented as a barcode are applicable to a device for reading the code (i.e., more specifically, the information shown with the code) 10 by the reflective wave of the light reflected from the code 10 by irradiating the light from the inside of the code reader 1 to the particular portion having the unique code 10.

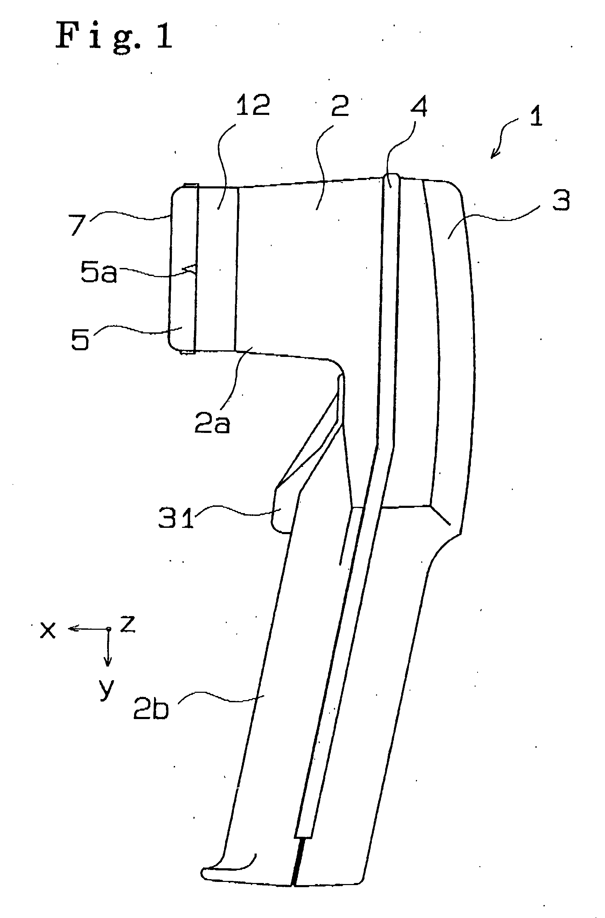

In the following description, an optical axis perpendicular to a CCD (charge coupled device) element included in a CCD camera 95 and lens group 91 is referred to as the X-axis. A vertical axis (as illustrated in Fig. 1) perpendicular to the X-axis is referred to as the Y-axis, and a horizontal axis perpendicular to the X-axis and to the Y-axis is referred to as the Z-axis. Further, the code reader 1 is described in the orientation shown in Fig. 1, so that the top of Fig. 1 is referred to as the top of the code reader, the bottom of Fig. 1 is referred to as the bottom of the code reader 1, and the right side of Fig. 1 is referred to as the back surface of the code reader 1.

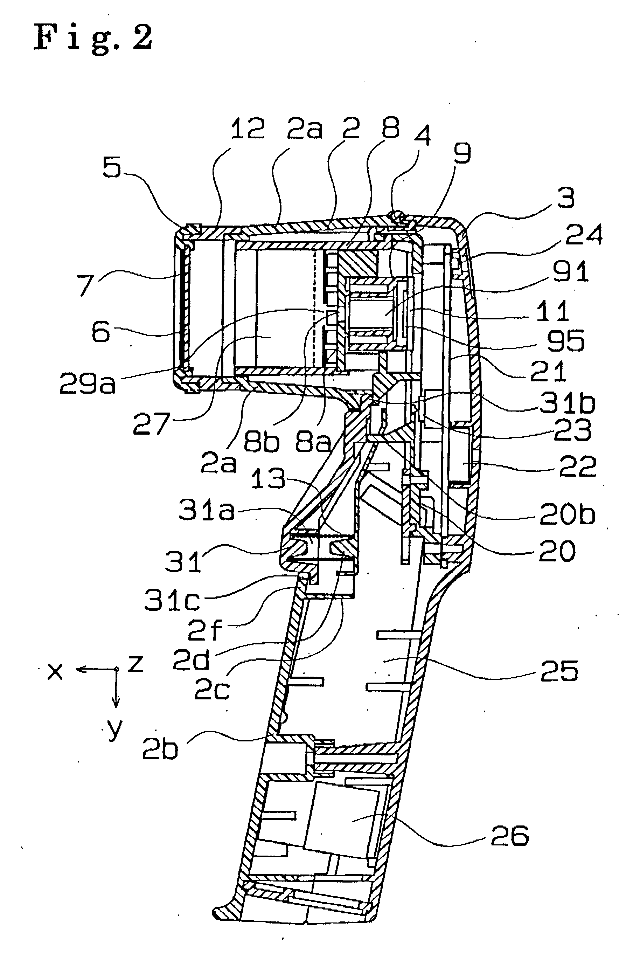

As shown in the non-limiting illustration of Figs. 1 and 2, the code reader 1 includes a first housing part 2 and a second housing 3 made of resin or the like. Nonlimiting examples of a suitable material include ABS resin and urethane. The first housing part 2 is formed with an opening on the back surface (i.e., right side of Fig. 1) and the opening is covered with the second housing 3 having a recessed configuration. The top of the reader of the first housing part 2 is unitarily formed with a hood portion 2a having an approximately rectangular configuration projected in the X-direction. A grip portion 2b is formed to be extended slightly tilted from the Y-axis shown in Fig. 1 in the acute angle from the hood portion 2a of the first housing part 2. The first and the second housing parts 2-3 may be assembled for covering the openings formed respectively and may be fixed each other with tightening members such as screws or the like.

The code reader 1 includes an operation lever 31, provided between the hood portion 2a and the grip portion 2b of the housing part 2, rotatable about the Z-axis. By the operation of the operation lever 31 by a user, the code reader 1 is activated to read the code 10 provided on the object 30.

When the first and the second housing parts 2, 3 are assembled to be fixed, a slip stopper 4 made of, for example, rubber or elastomer or the like may be provided, and may be configured to correspond to the opening configurations of the housing parts 2, 3. The slip stopper 4 is secured to the first and the second housing parts 2, 3, along the configuration of the opening end portions of the housing parts 2, 3 provided between the housing parts 2, 3. The slip stopper 4 prevents the slip of a hand from the grip portion 2b when the user operates the operation lever 31 of the code reader 1 for reading the code 10.

Referring to Fig. 2, the internal construction of the code reader 1 and positions of parts will be explained. The hood portion 2a of the housing part 2 opens in the X-direction. An adjusting member 12 for optically adjusting the reading distance is fitted at an end of the opening of the hood portion 2a. The adjusting member 12 includes a configuration the same with the end of the opening of the hood portion 2a and may be made of the same material as the housing part 2. A hood cover (cap) 5 including a light permeation plate, for example, transparent or semi-transparent glass or plastic or the like processed as the optical filter, having the optical filter function for cutting the ultraviolet rays and infrared rays, is provided on a tip end of the adjusting member 12. The hood cover 5 made of rubber or elastomer or the like is provided on one end of the adjusting member 12 provided on the hood portion 2a along the configuration of the opening of the adjusting member 12 corresponding to the opening of the hood portion 2a.

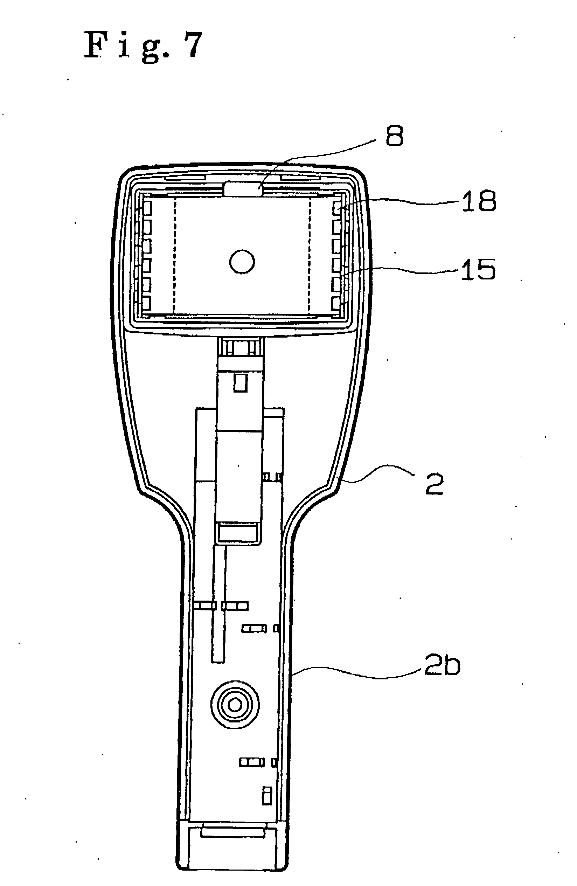

Four position determination portions 5a (Fig. 1) for facilitating the positioning in the Y-direction and the Z-direction between the code 10 and a surface to be read of the code 10 may be formed unitarily on the hood cover 5. The position determination portion 5a has a triangular configuration at the center in the Y-direction and the Z-direction of the hood cover 5. The hood cover 5 is generally rectangular (see Fig. 7). A surface covered with the hood cover 5 corresponds to a reading portion 7 for reading the code 10 and a surface to be read for reading the code 10 is located outside from the reading portion 7. In the hood portion 2a, an illumination unit 8 configured to illuminate the surface 32 to be read may be provided in an inner part of the reading portion 7.

The illumination unit 8 including an opening 8e on the reading portion 7 side may be configured to be a box shape with a bottom and may be made of resin. The illumination unit 8 is provided with light sources 18 for illumination for illuminating the surface 32 to be read by generating colored light (e.g., red) on both sides of a back surface internal wall relative to the X-direction. The internal wall of the illumination unit 8 may be coated with colours in a camouflage pattern (i.e., the surface may be painted with a color that reflects like, for example, white, with a comoouflage pattern imposed on it) or may be molded with resin with a similar camouflage pattern in order randomly to reflect the light generated from the light source 18 for illumination in the illumination unit 8. In this case, the internal wall of the illumination unit 8 may have a mirror surface or may be coated with a mirror surface instead of being coated with the camouflage pattern. A diffusion member 27 is provided between the reading portion 7 and the light source 18 for the illumination in the illumination unit 18 for diffusing the light generated from the light source 18 for the illumination when passing through thereof and for irradiating the efficiently diffused light (i.e., diffused light) to the surface 32 to be read.

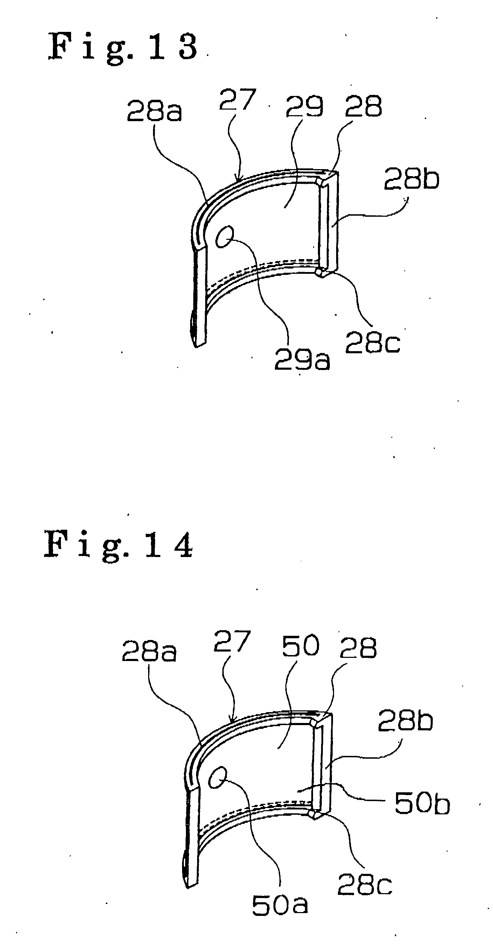

As shown in Fig. 13, the diffusion member 27 including a curved configuration is formed with a bore 29a in the center portion thereof to allow light reflected from the code 10 to pass to the CCD camera 95. The diffusion member 27 includes a diffusion sheet 29 for diffusing the actually entered light and a sheet frame (protection frame) 28 configured to be fitted with the diffusion sheet 29 to be positioned at a predetermined position in the illumination unit 8. The diffusion sheet 29 may be made of white semi-transparent polyester or polycarbonate or the like of a thickness of, for example, 0.1-0.2mm; more preferably, 0.15mm. The permeability may be 75-85 percent. On the other hand, the sheet frame 28 includes a configuration for protecting the diffusion sheet 29 from impact and may be made of any one of ABS resin, polypropylene resin, nylon system, or elastomer, or the like. The sheet frame 28 is elastically deformable and can position the diffusion sheet 29 therein. More specifically, an insertion opening 28a for inserting and accommodating the diffusion sheet 29 by sandwiching the diffusion sheet 29 is formed on one side (i.e., top of Fig. 13) of the sheet frame 28. By inserting the diffusion sheet 29 from the insertion opening 28a, the diffusion sheet 29 can be positioned in the illumination unit 8 while the periphery of the diffusion sheet 29 is supported by the sheet frame 28. In other words, the diffusion sheet 29 is replaceable. A diffusion sheet 29 with even thickness can be replaced with another diffusion sheet having gradually varied thickness. If ever the diffusion sheet 29 is deteriorated or damaged by secular change, the diffusion sheet 29 can be removed from the sheet frame 28 to be replaced. The sheet frame 28 per se can be removed from the illumination unit 8. In order to facilitate the replacement of the diffusion sheet 29 from the opening 8e of the illumination unit 8 of the diffusion member 27, an inwardly projecting rib 28c is formed as one unit with the sheet frame 28 on both end portions 28b in the Y-direction on the sheet frame 28.

Diffused light is generated by the diffusion member 27 in the illumination unit 8 by positioning the diffusion member 27 with the foregoing construction in the illumination unit 8. In this case, the diffused light is evenly generated within a region illustrated with dotted line of Fig. 12. By irradiating the diffused light onto the surface 32 to be read, an even illumination of the surface 32 is established.

An optical aperture (entrance pupil) 8b is formed on a back plate 8a of the illumination unit 8. The aperture 8b is provided facing the optical aperture 29a formed in the diffusion sheet 29 and functions as an entrance pupil for restricting the light passing to the CCD element of the CCD camera 95 when the code 10 is imaged using the reflective light. Two slit apertures 8c are formed on the back plate 8a one on each side of the aperture 8b. The slit apertures 8c allow light from a marker light source (marker LED) 94 which generates colored light (e.g. red) to pass to the surface 32 to be read. In this case, provided that a minimum distance in the X-direction between the light source 18 and the diffusion sheet 29 of the diffusion member 27 is determined as a minimum distance La and a minimum distance in the X-direction between the bore 8b functioning as the entrance pupil and the diffusion sheet 29 is determined as a minimum distance Lb, the minimum distance La is determined to be greater than the minimum distance Lb. The distance between the diffusion sheet 29 and the back plate 8a of the illumination unit 8a is gradually increased as shifting from the position of the bore 8b in the center portion to the outward direction in the Z-direction. The minimum distances La and Lb are measured in the X-direction.

An optical unit 9 including the lens group 91 comprising plural lenses on a common optical axis is provided on the inner part of the back plate 8a. The optical unit 9 is fixed to the illumination unit 8 by tightening members, for example a screw or the like, on the back surface of the illumination unit 8.

The optical unit 9 having the cubic configuration may be made of resin. The optical unit 9 is formed with a lens bore 92 arranged with the lens group 91 in the X-direction and two light source bores 93. Each marker light source 94 is positioned in the optical bore 93 respectively. In this case, the optical axis X of the lens group 91 and the CCD camera 95 are identical.

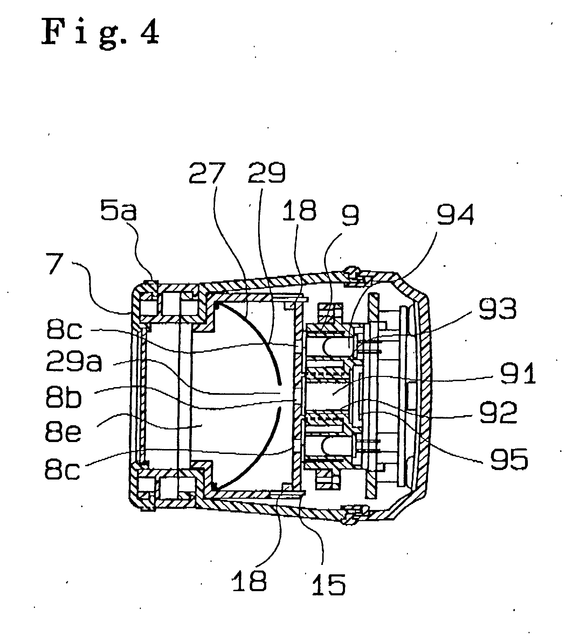

The back surface of the optical unit 9 may have a concave configuration as shown in Fig. 4. The CCD camera 95 having a CCD element therein may be provided in the concave portion. An optical board 11 mounted with the CCD camera 95 on the surface may be fixed to the optical unit 9 with tightening members, such as screws or the like, (not shown) from the back surface of the optical board 11. The marker light source 94 for generating the light for indicating the reading position when reading the code from two positions may be attached to the optical board 11. The optical board 11 may be mounted with the electronic parts such as a chip shaped transistor, resistors, and a condenser for constructing a drive circuit and detection circuit of the CCD camera 95 and a driver circuit for driving the marker light source 94. The optical board 11 illuminates the marker light source 94 and outputs a detection signal regarding the code reading from the image imaged on the CCD element by driving the CCD camera 95. The optical board 11 may be connected with a harness configured to be electrically connected with a main board 21. The detection signal related to the code reader from the optical board 11 is transmitted to the main board 21, and the signal from the main board 21 drives the marker light source 94 and the CCD camera 95.

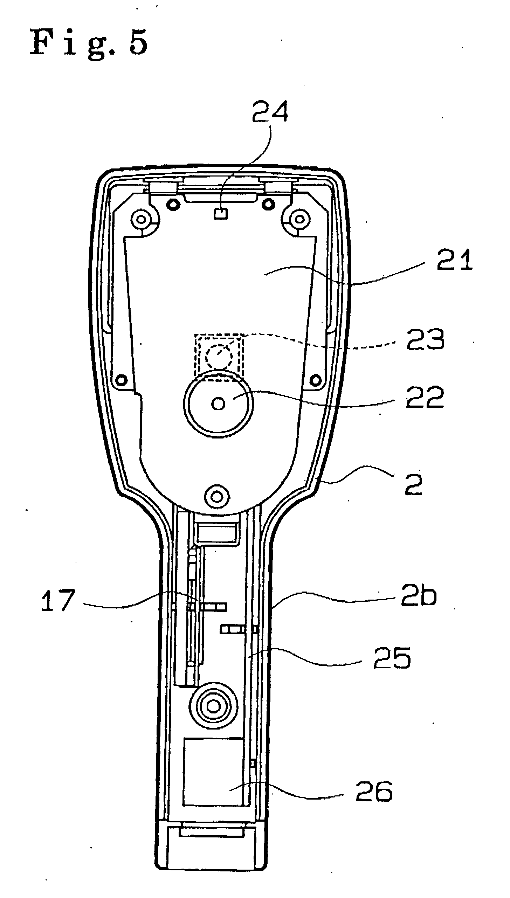

As shown in Fig. 5, the main board 21 is positioned on the rearmost surface of the housing part 2 for controlling the code reading of the coder reader 1. A voltage buzzer 22 and a light source 24 for confirmation (i.e., green LED for confirmation) 24 for visually indicating the completion of the reading are mounted on the rearmost side of the main board 21 by soldering or the like. A contact switch 23 is mounted on the other side of the main board 21 by soldering or the like. Further, the main board 21 may include chip shaped electronic parts such as transistors, resistors, and condensers on both surfaces thereof and may include a decode circuit for decoding a detection signal by the CCD element from the optical board 11, a drive circuit for driving the voltage buzzer 22, and a drive circuit for driving the light source 24 for the confirmation for confirming the reading.

Further, a central processing unit (CPU) (not shown) for controlling the code reading of the code reader 1 and a memory (not shown) for tentatively storing the information regarding the code reading may be mounted on the surface of the main board 21 on an optical board side. The main board 21 may be electrically connected to the opposingly arranged optical board 11 via, e.g., a flat cable. In the main board 21, the code 10 read by the CCD camera 95 may be decoded by a decode circuit (not shown) therein. The decoded signal may be transmitted to an interface board 25 provided in the grip portion 2b shown in Fig. 2.

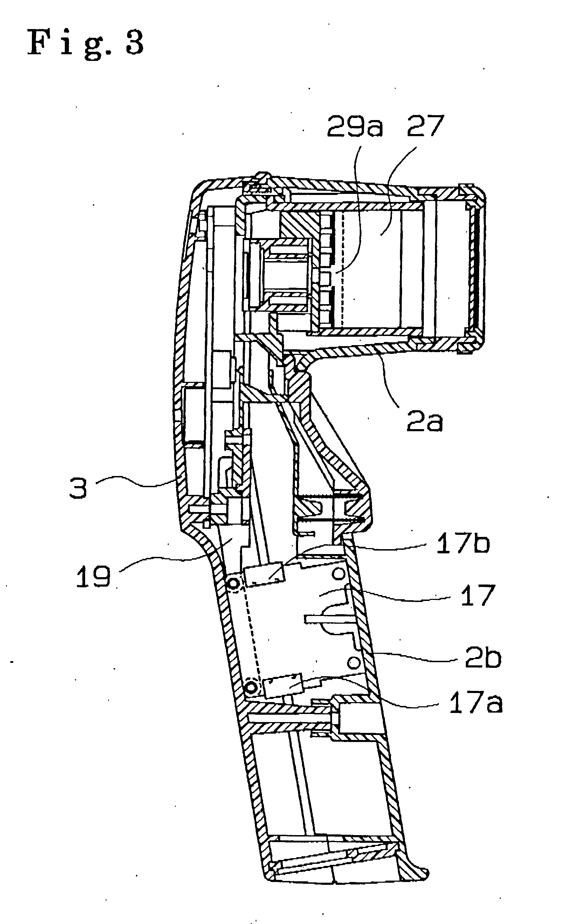

The signal for driving the light source 18 for the illumination provided in the illumination unit 8 may be driven by a light source drive board 17 for the illumination provided in the grip portion 2b as shown in Fig. 3. In this case, the light source drive board 17 for the illumination is driven by the direction from the main board 21.

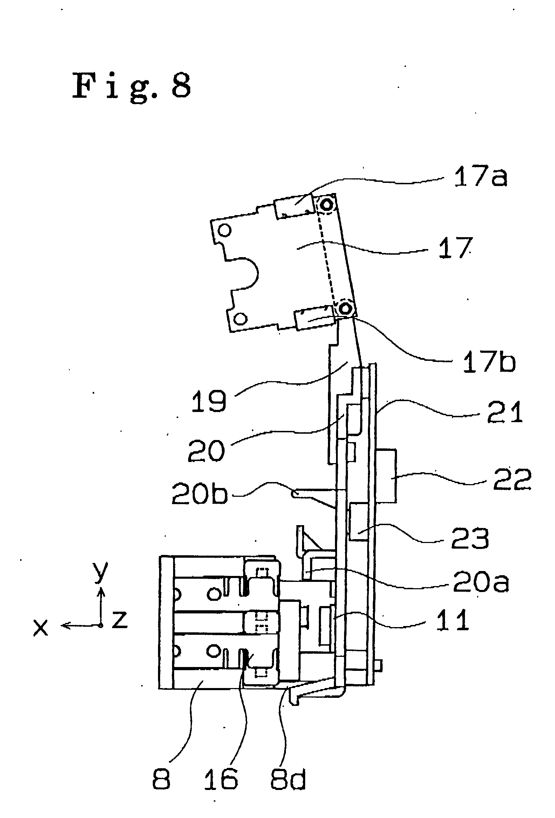

The main board 21, the optical board 11, the optical unit 9, and the illumination unit 8 are formed as one unit by, for example, a resin-made holder 20 as shown in the non-limiting illustration of Fig. 8. The holder 20 may be provided being positioned at a predetermined position of the first housing part 2 from the back surface of the first housing part 2 to be fixed to the first housing via four tightening members, such as screws or the like. The holder 20 may be extended in the Y-direction. A rectangular detent bore may be unitarily formed on the holder 20 on an end portion of the holder 20 corresponding to the top of the reader (i.e., bottom side in Fig. 8). An L-shaped claw portion 8d formed on the top of the reader of the illumination unit 8 may be detained in the detent bore. The position of the illumination unit 8 may be determined at a predetermined position of the holder 20. In order to contact the back surface of the illumination unit 8 to the holder 20 to fix thereon, an L-shaped mounting portion 20a for fixing the illumination unit 8 may be unitarily formed on the holder 20 on an end portion thereof, opposite to the craw portion 8d on an illumination unit top end. The tightening members, e.g., screws, may be applied to the mounting portion 20a from the back surface side of the holder 20 to fix the illumination unit 8 on the holder 20 on the reader topside.

One end of a holder 19 may be fixed to an end portion of the bottom side (i.e., top of Fig. 8) of the holder 20 via two tightening members such as screws or the like. The light source drive board 17 for driving the illumination having the driver circuit that may be mounted with the electronic parts such as the resistors and the transistors on the surface and for driving the light source 18 for the illumination may be fixed to the other end of the holder 19 with two tightening members, such as screws in the Y-direction as shown in Fig. 8. Thereafter, the light source drive board 17 for the illumination is positioned in the internal space of the grip portion 2b of the code reader 1 to be fixed to the housing part 2 by the tightening members such as screws or the like on X-Y surface. The light source drive board 17 for the illumination includes two connectors 17a, 17b on both end portions thereof in the Y-direction. The connector 17a is connected to an external connector which is connected to the main board 20 via a harness (not shown). Thus, a light source drive signal for driving the light source 18 for the illumination is output from the main board 21 to drive the light source 18 for the illumination by flashing or turning on the light source 18 for the illumination for performing the read based on the output signal.

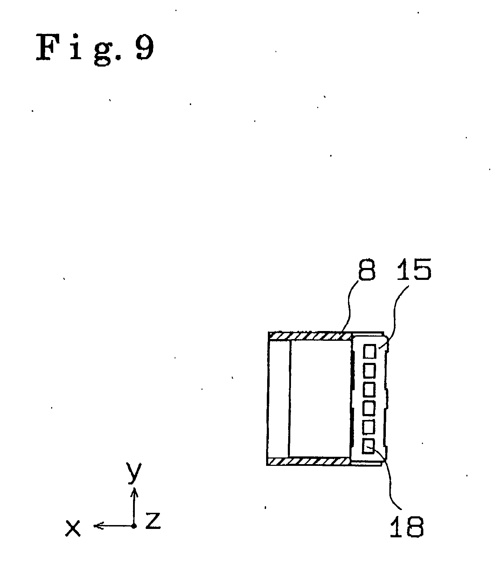

The construction of the light source 18 for the illumination of the illumination unit 8 will be explained referring to Figs. 4 and 9. As shown in Fig. 4, the illumination unit 8 includes an opening 8e configured to have narrower diameter than the space provided with the diffusion unit 8. The illumination unit 8 is provided on the back surface of the reading portion 7 with concave-convex engagement. As shown in Fig. 7, light source boards 15 for illumination provided with the plural light sources 18 for the illumination (e.g., six for each side) are opposingly positioned on both sides in the Z-direction at the back surface position of the illumination unit 8. The light generated from the light source 18 for the illumination brightly illuminates the bore 8b functioning as the entrance pupil by contacting at the position of the bore 8b at the central portion in the Z-direction. Thus, the bore 8b is brightly illuminated, the reflective light is entered via the bore 8b to be taken into the CCD element. On the other hand, because the diffusion member 27 is provided between the reading portion 7 and the bore 8b in the X-direction, the light having a predetermined irradiating angle from the light source 18 for the illumination permeates the curved diffusion sheet 29. In this case, the light entered via the diffusion sheet 28 is diffused to effectively illuminate the surface 32 to be read in the illumination unit 8.

As shown in Fig. 8, electrically conductive terminals 16 are connected to the light source 18 for the illumination. The terminals 16 are provided along a side surface of the illumination unit 8 in the Z-direction. Further, the electrically conductive terminals 16 are electrically connected to the connector 17b of the light source drive board 17 for the illumination via a harness (not shown). Thus, by providing the light source drive signal from the main board 21, the light source 18 for the illumination can be turned on or flashed with a predetermined cycle when operating the code reading.

On the other hand, a switch operation portion 20b may be projected in the X-direction on the middle portion of the holder 20 extended in the Y-direction. The switch operation portion 20b may be unitarily formed with the holder 20 while being movable in the X-direction. When the illumination unit 8 is unitarily provided (i.e., under subassembly state), the switch operation portion 20b may be projected in the X-direction perpendicularly from the holder 20 as shown in Fig. 8. With the foregoing construction, the contact switch 23 may be pushed by the back surface of the switch operation portion 20b when the switch operation portion 20b is operated and thus the turning on and the turning off of the contact switch 23 is performed. In this case, the code 10 may be read by the code reader 1 when the contact switch 23 is ON and the reading of the code 10 is prohibited when the contact switch 23 is OFF.

The operation of the operation lever 31 will be explained as follows. When the user grabs the grip portion 2b, the operation lever 31 may be operated using a finger. The operation lever may be pushed to rotate in the counterclockwise direction of Fig. 2 about a fulcrum 31b positioned around a base of the hood portion 2a. In this case, the code reader 1 is formed with a recess portion 2c having a surface extended in the Y-direction on a portion of the housing part 2 opposing to the operation lever 31 so that the operation lever 31 becomes rotatable at the operation. A projection 2d projecting in the X-direction is formed unitarily on a portion of the recess portion 2c of the housing part 2.

On the other hand, a concave portion 31 a for detaining one end of a spring 13 may be formed on a back surface corresponding to the projection 2d of the operation lever 31. The spring may be provided between the concave portion 31 a formed on the operation lever 31 and the projection 2d formed on the housing part 2. A flange 31c extended in the Y-direction may be unitarily formed on the operation lever 31 on an end portion opposite to the fulcrum 31b of the operation lever 31. The flange 31 c may extend along the configuration of the grip portion 2b from the grip portion 2b of the housing part 2. The rotation of the operation lever 31 may be restricted by a restriction portion 2f covering a portion of the concave portion 2c of the housing part 2. Thus, the operation lever 31 may be rotated until the back surface of the operation lever 31 contacts an apex of the projection 2d when the operation lever 31 is rotated in the counterclockwise direction shown in Fig. 2 about the fulcrum 31b against the biasing force of the spring 13. The switch contact portion 20b may contact the back surface. When the operation lever 31 is operated to rotate the operation lever 31 in the counterclockwise direction, the switch operation portion 20b is pushed. Accordingly, the contact switch 23 is turned on and the switch signal from the contact switch 23 is input into the CPU of the main board 21.

On the other hand, when the force is not applied to the operation lever 31 after operation thereof, the operation lever 31 is rotated in the clockwise direction of Fig. 2 about the fulcrum 31b by the biasing force of the spring 13. Thereafter, the flange 31c formed on one end of the operation lever 31 may contact the restriction portion 2f of the housing part 2 to restrict the further rotation of the operation lever 31 in the clockwise direction. As forgoing, when the rotation of the operation lever 31 in the counterclockwise direction is canceled, the pushing pressure to the contact switch 23 by the switch operation portion 20b is canceled. Thus, the contact switch 23 becomes OFF and the switch signal thereof is input into the CPU.

The connection between the code reader 1 and external device 40 will be explained as follows. As shown in the non-limiting illustration of Fig. 5, the interface board (i.e., I/F board) 25 may be fitted into a slit formed on a back surface of the housing part 2 to be mounted opposing the drive board 17, while keeping a predetermined distance relative to the driver board 17 in the grip portion 2b of the code reader 1. The interface board 25 may be electrically connected to the main board 21 via a cable (e.g., a flat cable, a harness or the like, not shown). A connector 26 may be fixed to an end of the I/F board 25 on the bottom portion of the reader. The I/F board 25 also includes a power source circuit for supplying a constant direct current (e.g., 5V) relative to the plural boards of the code reader 1 therein. A circuit on the I/F board 25 supplies a stable predetermined power (e.g., 5V) to the main board 21. In case the external connector is connected to the connector 26, the date of the signal (e.g., decoded signal of the code 10 detected by the CCD camera 95) regarding the reading of the code may be sent to and received by the external device (e.g., code control device having the display function or the code analysis device) 40 connected via the connector 26. With the foregoing construction, for example, the reading signal of the code 10 decoded from a decode circuit may be output from the external device 40 to the code reader 1 and the reading signal may be sent to the external device 40.

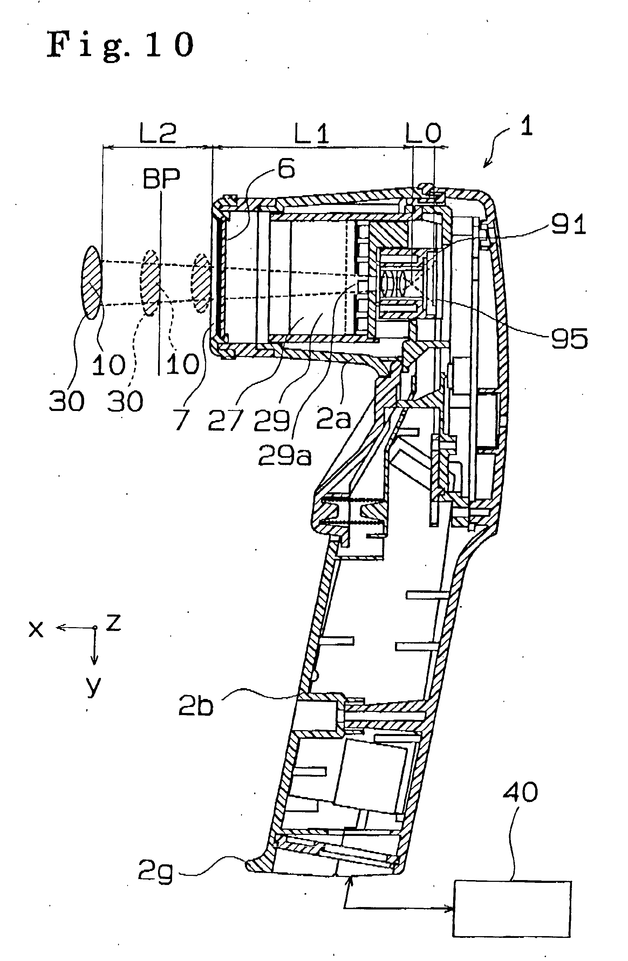

The operation of the code reader 1 will be explained with reference to Fig. 10 as follows. The code reader 1 enables to read the code 10 by directly contacting the reading portion 7 to the object 30 provided with the code or the code 10 indicating the two-dimensional unique information and by keeping a distance from the surface 7 to be read without the contact to the code 10 or to the object 30 provided with the code 10. The user performing the reading of the code 10 holds the grip portion 2b of the code reader 1 and positions the code reader 1 at the position that the reading portion 7 is over the two-dimensional code 10. When the user pulls the operation lever 31 against the biasing force of the spring 13 from the position, the operation lever 31 rotates about the fulcrum 31b in the counterclockwise direction shown in Fig. 2. By this operation, the switch operation portion 20b may be pushed by the back surface of the operation lever 31. Accordingly, the switch operation portion 20b may move in the X-direction, the contact switch 23 provided on the back surface of the switch operation portion 20b is pushed by the movement of the switch operation portion 20b to be ON state. When the contact switch 23 is ON, the signal indicating the ON state of the contact switch 23 may be recognized as a trigger for starting the reading by the CPU (not shown) in the main board 21. The information indicated by the code 10 may be read in the foregoing manner. The main board 21 is configured to simultaneously output the drive signal for driving the indirect light source 18 for the illumination and the marker light source 94 to the light source drive board 17 for the illumination and the optical board 11 under the state that the contact switch 23 is ON. With the drive signal for driving the light sources, the light source 18 for the illumination opposingly positioned in the illumination unit 8 are flashed either simultaneously or with a predetermined cycle. The flashed light from the light source 18 for the illumination on both sides contact at the position of the bore 8b functioning as the entrance pupil to brightly illuminate the bore 8b and a part of the light having the predetermined irradiation angle is entered into the diffusion sheet 29. The light entered into the diffusion sheet 29 (i.e., a part of the red light having the predetermined irradiation angle or the light reflected on an inside surface having a camouflaged pattern or mirror surface or the like of the illumination unit 8) is effectively diffused by the diffusion sheet 29 having the permeability of 75-85 percent, as shown in Fig. 12, is introduced to the reading portion 7 for performing the reading of the code 10, and is irradiated on the surface 32 to be read provided with the code 10.

Accordingly, by permeating the light through the diffusion sheet 29 of the diffusion member 27, a predetermined amount of the diffusion light which is not high light amount is generated to brightly illuminate the surface 32 to be read. In this case, simultaneously, the main board 21 drives the marker light source 94 provided on the both sides of the CCD camera 95. The red light generated from the marker light source 94 passes through the slit bores 8c formed on the back plate 8a of the illumination unit 8, passes through the diffusion sheet 29, is irradiated on the surface 32 to be read to be utilized for positioning relative to the object 30 provided with the code 10. When the positioning of the code reader 1 relative to the code 10 is performed by the light from the marker light source 94 so that the code reading is performable, the light contacting the code 10 is reflected depending on the condition of the code 10 (e.g., condition of the darkness or the condition of the roughness of the surface) and is entered into the bore 8b on the central portion of the illumination unit 8 functioning as the entrance pupil via the bore 29a provided on the central portion of the diffusion sheet 29. The light entered into the bore 8b is imaged on the CCD element of the CCD camera 95 via the lens group 91 to be detected. The signal detected by the CCD element of the CCD camera 95 is thereafter transmitted to the main board 21. In the main broad 21, the detected signal is decoded based on the strength of the reflective light by a decode circuit therein and the decoded signal is transmitted to the I/F circuit 25. Further thereafter, the decoded signal is transmitted to the external device 40 from the connector 26 provided on the I/F circuit 25. The external device 40 controls the plural object 30 by displaying the read two dimensional code 10 and by analyzing the information indicated by the code 10 based on the signal detected by the CCD camera 95.

The optical reading distance of the code reader 1 will be explained referring to Fig. 10.

The CCD camera 95 is fixed on the optical board 11 assembled on the back surface of the optical unit 9. With the construction shown in Fig. 10, the optical axis X of the CCD camera 95 and the optical axis X of the lens group 91 including the plural lens therein are identical. Provided that a distance between the CCD camera 95 and a camera focus point is determined as a distance L0 and a distance between the focus point and a tip end of the reading portion 7 is determined as a distance L1, an adjusting member 12 is provided between the hood portion 2a and the hood cover 5 for maintaining a light permeable board 6 functioning as the optical filter so that the distance L1 corresponds to a minimum recognition distance for recognizing the object to be read (i.e., two-dimensional code) on the surface to be read and for imaging the image on the CCD element of the CCD camera 95. Thus, the code can be read even when the reading portion 7 directly contacts the code 10 because the recognizable distance of the CCD camera 95 corresponds to the minimum recognition distance L1. In other words, the reading operation of the code reader 1 can be easily performed by the user who is not familiar with the operation thereof by contacting the reading surface of the code reader 1 on the code 10. In this case, by slightly projecting an end portion 2g of the grip portion 2b of the code reader 1 in the X-direction, the reading operation of the code 10 can be performed only by the operation of the operation lever 31 without holding the code reader 1 while contacting both the end portion 2g of the grip portion 2b and the end portion of the reading portion 7 to either to the object 30 or a base provided with the object 30. Even when the reading operation is performed by keeping a predetermined distance between the reading portion 7 and the code 10, the image capturing is performed by the CCD camera 95 by generating the diffusion light by the light transmission member 27 before entering the reflection light to the CCD camera 95 in the illumination unit 8. Thus, for example, even when the code 10 is provided on the object with a mirror surface, the reading can be performed without causing the saturation of the CCD element by providing the light transmission member 27 between the CCD camera 95 and the reading portion 7 because the strength of the reflective light is saturated up to a predetermined level by the reflective light.

With the code reader 1 according to the non-limiting first embodiment of the present invention, when reading is performed keeping the distance between the code 10 and the coder reader 1, because the positional relationship with the camera focus point is determined with the minimum recognition distance L1, one of zero points in the recognition range by CCD element is to be determined. Thus, a recognizable region L2 can be maximally obtained to a position of the maximum recognition distance, which makes the recognition of the code 10 easy during the operation. In this case, an optimum focus position BP is positioned between the minimum recognition distance and the maximum recognition distance (intermediate position between the minimum recognition distance and the maximum recognition distance).

When an accurate reading operation of the code 10 is performed by the code reader 1, the alarm noise of the voltage buzzer 22 is made and a light source 24 (Fig. 5) for confirming the successful reading for example by generating a green light is turned on by the main board 21, Thus by audibly informing the user with the buzzer 22 and by visually informing the user with the light source 24, code reader informs the user that the code reader 1 has accurately read the code 10.

Although the diffusion sheet 29 having the even membrane thickness is applied for diffusing the light generated from the light source 18 for the illumination with the first non-limiting embodiment of the code reader of the present invention, the configuration of the diffusion sheet is not limited. For example, the thickness of the diffusion sheet may be gradually varied from the end portion 28b to the aperture 29a on the central portion. With this construction of the diffusion sheet having gradually varied thickness, an evenly diffused light may be generated. In other words, the diffusion sheet 29 is thinner when the distance from the light source 18 to the diffusion sheet 29 is longer and is thicker when the distance from the light source 19 to the diffusion sheet 29 is shorter. By making the thickness of the diffusion sheet an inverse function of the distance from the light source 18 to the diffusion sheet 29, an even diffusion of light can be created with this simple construction.

Further, with the non-limiting first embodiment of the code reader of the present invention, the adjusting member 12 having the hood cover 5 is configured to be removable from the housing part 2. In case the adjusting member 12 is removed from the housing part 2, the opening 8e of the illumination unit 8 provided in the housing is exposed. Thus, when providing the diffusion member 27 shown in Fig. 13 in order to create the even diffusion light in the illumination unit 8, the diffusion sheet 29 is sandwiched to be accommodated in the sheet frame via the insertion opening 28a along the guiding surface formed in the sheet frame. Then, by inwardly bending the both end portions 28b of the sheet frame 28, the diffusion member 27 is inserted into the internal space of the illumination unit 8 via the opening 8e to be provided therein.

In this case, the diffusion member 27 may be positioned with a stopper (not shown) formed on a predetermined position on an internal surface of the illumination unit 8. With the foregoing construction, the diffusion member 27 can be accommodated in the illumination unit 8 via the opening 8e by removing the reading portion 7 of the code reader 1 from the hood portion 2a of the housing part 2 along with the adjusting member 12. Accordingly, the diffusion member 27 can be replaced via the opening 8e in case it is desired to change the permeability of the diffusion sheet 29 to the desired permeability or when it is required to exchange the diffusion sheet 29 due to the secular change.

In this case, the lip 28c provided on the end portions 28b of the sheet frame 28 makes it easy to exchange the diffusion member 27 because the user can pinches the lip 28c for exchanging the diffusion sheet 29.

Further, although the diffusion member 27 includes a curved configuration in the non-limiting first embodiment of the present invention, the configuration of the diffusion member is not limited. For example, the diffusion member may be configured to be in parallel to the back plate 8a of the illumination unit 8. By configuring the diffusion member 27 to be in parallel to the back plate 8a of the illumination unit 8, the diameter of the bore 29a can be determined in accordance with the minimum distance between the bore 29a configured to enter the reflective light contacting the unique code 10 and the back plate 8a of the diffusion sheet 29 (i.e., the minimum distance is determined to be proportional to the diameter of the bore 29).

According to the non-limiting first embodiment of the code reader of the present invention, even when the illumination means are opposingly positioned, the diffusion light can be irradiated on the surface to be read by refracting the light from the illumination means by the diffusion member. By the refraction of the light when passing through the diffusion member, the irradiation angle of the light relative to the surface to be read can be expanded and the surface to be read can be brightly illuminated by the diffusion light. Because the luminance of the reflective light reflecting by contacting the unique code is relatively improved, the code recognition becomes easier.

By configuring the diffusion member to have the aperture 29a and to have a curved shape, the reflective light reflected from the unique code is entered through the aperture 29a provided in the diffusion member. Because the reflective light whose luminance is not attenuated is entered into the entrance pupil via theaperture , the code recognition performance is improved.

Further, by gradually varying the thickness of the diffusion member to be thinner as closer to the bore, a more even diffusion of light can be generated.

With the code reader according to the first non-limiting embodiment of the present invention, the illumination means and the diffusion member are provided in the housing, the illumination unit includes the opening, the reading portion is detachable from the housing, and the diffusion member can be inserted to be accommodated in the illumination unit via the opening. In case the illumination unit including the illumination means and the diffusion member are provided in the housing, the reading portion can be removed from the housing to insert the diffusion member in the illumination unit via the opening to accommodate, and the diffusion member can be removed to be exchanged via the opening.

By providing the mirror surface or camouflaged color for reflecting the light from the illumination means on the internal surface of the illumination unit, the light from the illumination means can be effectively reflected on the internal surface with a random reflective pattern.

Because the diffusion member includes the diffusion sheet and the protection frame for protecting the surrounding of the diffusion sheet, the diffusion member can be assembled in the illumination unit via the protection frame.

Because the diffusion sheet can be detachable in the protection frame, only the diffusion sheet can be exchanged. In case the permeability of the diffusion sheet is required to be changed, the diffusion sheet can be replaced with a diffusion sheet with the predetermined permeability.

By forming the lip on the protection frame, the disassembling and the assembling to be accommodated of the diffusion member from and to the illumination unit can be performed using the lip.

A second embodiment of the code reader will be explained referring to Fig. 14. The code reader of the second embodiment includes the diffusion member 27 including a diffusion sheet 50 having a permeable portion 50a facing the entrance pupil 8b for lineally permeating the light when the light permeates and a diffusion portion 50b having a function for diffusing the light surrounding the permeable portion 50a. The permeable portion 50a is filled with a material for fully permeating the light such as vinyl sheet, or the like. With this construction, by linearly permeating the light entering into the diffusion sheet 50 when the light permeates the diffusion sheet 50 at the portion facing the entrance pupil 8b, the image without the strain can be imaged by the CCD camera. The diffusion sheet 50 may be made by applying or pasting the diffusion member, for example, bead coat layer, on the sheet member made of such as transparent glass, plastic, resin, or the like avoiding at least the portion facing the entrance pupil 8b. Transparent member such as glass, plastic, resin, or the like may be injected into the bore formed in the central portion of the diffusion member.

## Claims

1. A code reader comprising:
a housing (2,3)
a code reading head on the housing (2,3) for reading a unique code provided on an object;
wherein the code reading head comprises:
an illumination unit (8) including illuminating means (18) within the housing (2,3) for illuminating the code; and
sensing means (95) within the housing (2,3) for capturing an image of the code from light from the illuminating means (18) that is reflected back from the code;
**CHARACTERISED IN THAT** a diffusion member (27) is provided within the illumination unit (8) for directing diffused light from the illuminating means (18) onto the code;
an optical aperture (8b) is provided between the diffusion member (27) and the sensing means (95) for passing the image of the code back to the sensing means (95); and
the illuminating means (18) comprises plural illuminating means positioned on opposite sides of the optical aperture (8b).

2. A code reader according to claim 1, wherein the diffusion member (27) has a curved shape and includes an optical aperture (29a) or a non-diffusing light permeable portion (50a) aligned with the optical aperture (8b) of the sensing means (95).

3. A code reader according to claim 1, wherein the diffusion member (27) is positioned within the code reading head such that the minimum distance between the diffusion member and the optical aperture (8b) of the sensing means (95) is shorter than the minimum distance between the diffusion member (27) and the illuminating means (18).

4. A code reader according to any preceding claim, wherein the thickness of the diffusion member (27) is an inverse function of the distance of the diffusion member (27) from the illuminating means (18).

5. A code reader according to any preceding claim wherein the housing (2,3) can be opened to expose an opening (8e) through which the diffusion member (27) can be inserted into and removed from the illumination unit (8).

6. A code reader according to any preceding claim wherein the code reading head includes an internal surface which is patterned in different colours for example in a camouflage pattern for randomly reflecting the light from the illumination means.

7. A code reader according to any preceding claim, wherein the diffusion member (27) includes a diffusion sheet (29) and a protection frame (28) for protecting a periphery of the diffusion sheet (29).

8. A code reader according to claim 7, wherein the protection frame (28) is configured to be attached to the diffusion sheet (29).

9. A code reader according to claim 5, wherein the protection frame (28) includes a lip (28c).

10. A code reader according to any preceding claim, wherein the sensing means (95) is a CCD camera, provided in the housing, configured to image the unique code.
